# EUROPEAN PATENT SPECIFICATION

(11) **EP 3 575 141 B1**
(45) Date of publication and mention of the grant of the patent: **24.03.2021**
(21) Application number: 18744829.5
(22) Date of filing: 22.01.2018
(51) Int. Cl.: B60N 2/22, B60N 2/64, B60N 2/68

(54) **VEHICULAR SEAT FRAME STRUCTURE**
RAHMENSTRUKTUR FÜR FAHRZEUGSITZ
STRUCTURE DE CADRE DE SIÈGE DE VÉHICULE

(30) Priority: 24.01.2017 JP 2017010470
(43) Date of publication of application: 04.12.2019
(73) Proprietor: Suzuki Motor Corporation, Hamamatsu, Shizuoka 432-8611 (JP)
(72) Inventor: YASUIKE, Shigeaki, Hamamatsu-shi, Shizuoka 432-8611 (JP); KOMURA, Shogo, Hamamatsu-shi, Shizuoka 432-8611 (JP); SAKURAI, Akihiro, Hamamatsu-shi, Shizuoka 432-8611 (JP); KIKUCHI, Ryo, Yokohama-shi, Kanagawa 222-0033 (JP); ANDO, Yukinori, Yokohama-shi, Kanagawa 222-0033 (JP)
(74) Representative: Freischem & Partner Patentanwälte mbB
(86) International application number: PCT/JP2018/001702
(87) International publication number: WO 2018/139383

(56) References cited:
- WO-A1-2015/132215
- DE-A1-102012 107 035
- JP-A- H1 071 042
- JP-A- H06 135 271
- JP-A- 2005 137 893
- JP-A- 2013 189 065
- JP-A- 2015 040 024
- JP-A- 2016 199 240
- US-A- 4 736 986
- US-A1- 2016 214 518

## Description

### Technical Field

The present invention relates to a vehicle seat frame structure.

### Background Art

A conventional vehicle seat includes a seatback frame having a resin molded portion formed of resin material, and a reclining mechanism mounted to the resin molded portion in order to rotatably support the seatback frame, wherein the reclining mechanism is mounted to the resin molded portion by being bonded by adhesive to the portion of a mounting surface formed on the resin molded portion where the reclining mechanism is mounted. Further, in a structure, in mounting the reclining mechanism to an outer side surface of a side frame, a bolt inserted into a positioning hole formed in the outer side surface is fitted with a bolt hole of the reclining mechanism, thereby employing both bonding and bolt fastening (see, for example, JP 2013-189065 A).

JP 2015-040024 A discloses a vehicle seat S including a height link device 50 which supports a resin cushion frame 20 so that the cushion frame 20 moves up and down. The vehicle seat S includes a connection bracket 40 which connects the cushion frame 20 with a back frame 10. The vehicle seat S has a reclining device 30 that rotatably connects the seat back 1 to the seat cushion 2.

### Summary of Invention

### Technical Problem

In the conventional vehicle seat frame structure, however, the reclining mechanism is mounted to the outer side surface of the side frame by adhesive, so that when, for example, a shock load at the time of vehicle collision is received, a torsional load is applied to the seatback frame as a rotation shaft arranged between the side frames is pushed and bent to thereby generate a peeling load in the reclining mechanism. Thus, when the reclining mechanism is bonded by adhesive, which is non-resistant to a peeling load, there is a concern that the reclining mechanism will be peeled off.

Further, in the case in which the bolt is fitted from the seatback frame side, the bolt bearing surface comes into contact with the resin material, so that there is a concern of creep phenomenon being generated in which the resin material is deformed by the fastening force.

The present invention has been made in view of these problems in the related art. It is an object of the present invention to provide a vehicle seat frame structure which, in the case in which a shock load is applied, helps to prevent concentration of stress at the mounting portion of the reclining mechanism to thereby prevent damage to the cushion frame and the seatback frame, and which helps to prevent generation of a creep phenomenon in which the cushion frame and the seatback frame are deformed by the fastening force, making it possible to reduce the probability of the fastening force being reduced.

### Solution to Problem

To solve the abovementioned problems in the related art, there is provided, in accordance with the present invention, a vehicle seat frame structure including a resin seatback frame and a cushion frame, the seatback frame being rotatably supported by the cushion frame by means of a reclining mechanism, wherein an outer cushion bracket is provided on an outer side of the cushion frame; an inner cushion bracket fixed to the reclining mechanism is provided between the reclining mechanism and the cushion frame; the cushion frame is held between the outer cushion bracket and the inner cushion bracket; and the outer cushion bracket and the inner cushion bracket are fixed in position by a fastening member.

### Advantageous Effects of Invention

As described above, in accordance with the present invention, there is provided a vehicle seat frame structure which has a resin seatback frame and a cushion frame and in which the seatback frame is rotatably supported by the cushion frame by means of a reclining mechanism, wherein an outer cushion bracket is provided on the outer side of the cushion frame; an inner cushion bracket fixed to the reclining mechanism is provided between the reclining mechanism and the cushion frame; the cushion frame is held between the outer cushion bracket and the inner cushion bracket; and the outer cushion bracket and the inner cushion bracket are fixed in position by a fastening member, whereby it is possible to attain the following effects.

That is, in the vehicle seat frame structure according to the present invention, the reclining mechanism is retained by holding the cushion frame between the outer cushion bracket and the inner cushion bracket, so that it is possible to prevent concentration of stress at the mounting portion of the reclining mechanism. Thus, even in the case in which the seat frame of the vehicle seat, to which a large force is applied due to a shock load or the like, is formed of resin material, it is possible to prevent damage of the cushion frame by the shock load. Further, the rigidity of the portion around the cushion frame to which the reclining mechanism is mounted can be enhanced to substantially the same degree on the inner and outer sides of the cushion frame, so that it is possible to prevent concentration of stress at a specific portion of the cushion frame due to a difference in rigidity between the inner and outer sides of the cushion frame, making it possible to prevent breakage of the cushion frame.

Further, in the vehicle seat frame structure according to the present invention, the reclining mechanism is fastened by a fastening member, so that in the case in which a shock load is applied due to rearward collision of the vehicle, even when there is generated a load working to peel off the reclining mechanism from the cushion frame, it is possible to prevent damage to the cushion frame, making it possible to firmly retain the reclining mechanism.

Further, in the vehicle seat frame structure according to the present invention, the cushion bracket is held between the fastening member and the resin cushion frame, whereby the fastening member and the cushion frame are not in direct contact with each other, so that it is possible to prevent generation of a creep phenomenon in which the cushion frame is deformed by the fastening force, thus making it possible to reduce the probability of the fastening force being reduced and to reliably retain the reclining mechanism for a long period of time.

### Brief Description of Drawings

Figure 1 is a perspective view of a vehicle seat to which the vehicle seat frame structure according to an embodiment of the present invention is applied.
Figure 2 is a perspective view of the structure of a vehicle seat frame according to an embodiment of the present invention.
Figure 3 is a perspective view of the vehicle seat frame of Figure 2 in the state before the mounting of a seatback frame, a reclining mechanism, and a cushion frame thereto.
Figure 4 is an enlarged perspective view of the state before the mounting of the reclining mechanism and the cushion frame of Figure 3.
Figure 5 is an enlarged perspective view of the state before the mounting of the seatback frame and the reclining mechanism of Figure 3.

### Description of Embodiment

In the following, an embodiment of the present invention will be described in detail.

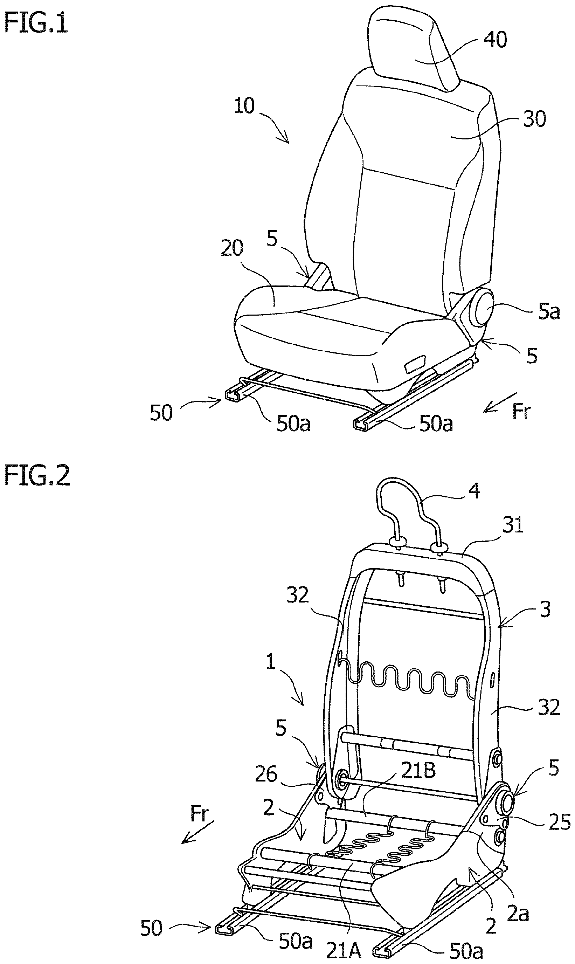

Figures 1 through 5 illustrate the structure of the vehicle seat frame according to an embodiment of the present invention. In Figures 1 through 3, the arrow Fr designates the front side of the vehicle.

As shown in Figure 1, a vehicle seat 10 to which the structure of the vehicle seat frame of an embodiment of the present invention is applied is a seat arranged in the interior of the vehicle, and is mainly equipped with a seat cushion 20 on which the occupant is to be seated, a seatback 30 supporting the back of the occupant at the rear end portion of the seat cushion 20, and a headrest 40 supporting the head of the occupant at the top of the seatback 30. The vehicle seat 10 of the present embodiment is installed on a pair of right and left seat rails 50a of a slide device 50, and is fixed to the vehicle body via the slide device 50. Due to the slide device 50, it is possible to slide the seat cushion 20 in the front-rear direction of the vehicle, making it possible to adjust the seat position.

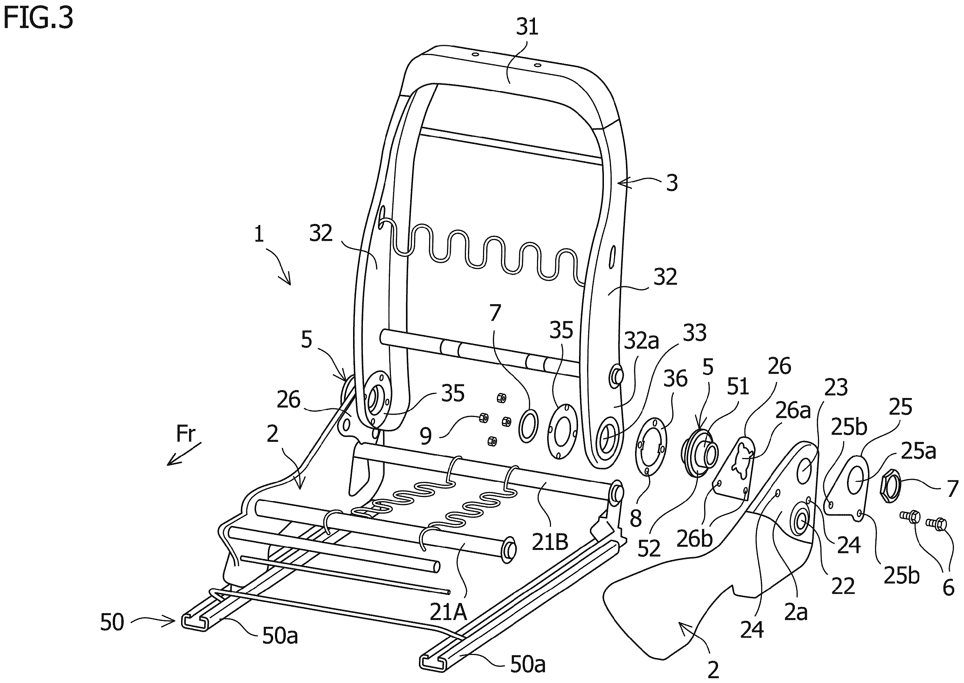

As shown in Figures 2 and 3, a vehicle seat frame 1 constituting the framework of the vehicle seat 10 of the present embodiment has a resin cushion frame 2 that is the framework of the seat cushion 20, a resin seatback frame 3 that is the framework of the seatback 30, and a headrest frame 4 that is the framework of the headrest 40. Further, the vehicle seat frame 1 has a reclining mechanism 5 which is provided between the rear end portion of the cushion frame 2 and the lower end portion of the seatback frame 3 and an outer side of which is covered with a lining cover 5a (See Figure 1). By means of the reclining mechanism 5, the seatback frame 3 is rotatably supported by the cushion frame 2.

As the material of the cushion frame 2 and the seatback frame 3 that are made of resin, it is desirable to employ a fiber reinforced resin such as CFRP, which is of high strength and is lightweight. It is desirable for the fiber reinforced resin to be of a laminated structure, which is capable of attenuating strong anisotropy. Unlike a metal, however, the fiber reinforced resin exhibits the possibility of being fractured instead of being bent when a shock load is applied thereto. Further, it exhibits anisotropy, and is non-resistant to a tensile force in a direction perpendicular to the fiber direction, so that in the case in which it is used for the vehicle seat frame 1, which is subject to a shock load from various directions, it is necessary to disperse the load from the weak-load direction or to achieve an improvement in terms of the strength of the seat frame 1. Further, a laminated structure is non-resistant to a load in the laminating direction (the peeling direction of the laminated structure), so that it is necessary to disperse the load in the especially weak-load laminating direction or to achieve an improvement in terms of the strength of the seat frame 1.

As shown in Figures 2 through 4, the cushion frame 2 of the present embodiment is formed by plate-like members which are arranged opposite each other along the vehicle front-rear direction in an upright state and which are respectively provided on both the right and left sides in the vehicle width direction (seat width direction) of the seat frame 1. The cushion frames 2 on both the right and left sides are connected to each other by cross members 21A and 21B bridging along the vehicle width direction of the seat frame 1, and the right and left side end portions of the cross members 21A and 21B are respectively fixed to the front and rear portions of the cushion frames 2 by fastening members or the like. For this purpose, in the front and rear portions of the cushion frames 2, there are provided mounting holes 22 into which right and left end portions of the cross members 21A and 21B are inserted for mounting.

A rear end portion 2a of each cushion frame 2 is formed in a substantially triangular (or substantially trapezoidal, substantially arc-like or the like) configuration in side view and extending obliquely upwards towards the rear side of the vehicle. Further, in the upper portion of the rear end portion 2a, there is provided an insertion hole 23 into which a shaft portion 51 of the reclining mechanism 5 is inserted, and in the lower side of the insertion hole 23, there are provided two insertion holes 24 into which screw portions 6a of bolts 6 constituting fastening members are inserted and which are at an interval in the front-rear direction and up-down direction of the vehicle.

As shown in Figures 2 through 4, on the outer side of each cushion frame 2 of the present embodiment, there is provided an outer cushion bracket 25 formed of metal. Further, between the reclining mechanism 5 and the cushion frame 2, and on the inner side of the cushion frame 2, there is provided an inner cushion bracket 26 formed of metal that is joined for fixation to a main body portion 52 of the reclining mechanism 5 by welding or the like. The outer cushion bracket 25 and the inner cushion bracket 26 are formed by plate-like bodies of a substantially triangular configuration in side view substantially corresponding to the configuration of the rear end portion 2a of the cushion frame 2. In the outer cushion bracket 25 and the inner cushion bracket 26, there are respectively provided, at portions corresponding to the insertion hole 23 and the insertion hole 24 of the cushion frame 2, through-holes 25a and 26a through which the shaft portion 51 of the reclining mechanism 5 is passed, and bolt holes 25b and 26b into which the screw portions 6a of the bolts 6 are inserted for mounting.

That is, as shown in Figures 2 and 3, the rear end portion 2a of the cushion frame 2 of the present embodiment is held between the outer cushion bracket 25 and the inner cushion bracket 26, and the outer cushion bracket 25 and the inner cushion bracket 26 are fixed in position through the intermediation of the cushion frame 2 by the bolts 6 the screw portions 6a of which are inserted into the bolt holes 25b and 26b and the insertion hole 24. In the state in which the shaft portion 51 is inserted into the through-hole 26a of the inner cushion bracket 26, the insertion hole 23 of the cushion frame 2, and the through-hole 25a of the outer cushion bracket 25, a ring nut 7 is threadedly engaged with the screw portion formed on the outer peripheral surface of the shaft portion 51, and is fastened thereto, whereby the reclining mechanism 5 is fixed to the rear end portion 2a of the cushion frame 2. Further, adhesive may be applied between the rear end portion 2a of the cushion frame 2, the outer cushion bracket 25, and the inner cushion bracket 26, thereby joining the cushion frame 2, and the cushion brackets 25 and 26 to each other still more firmly.

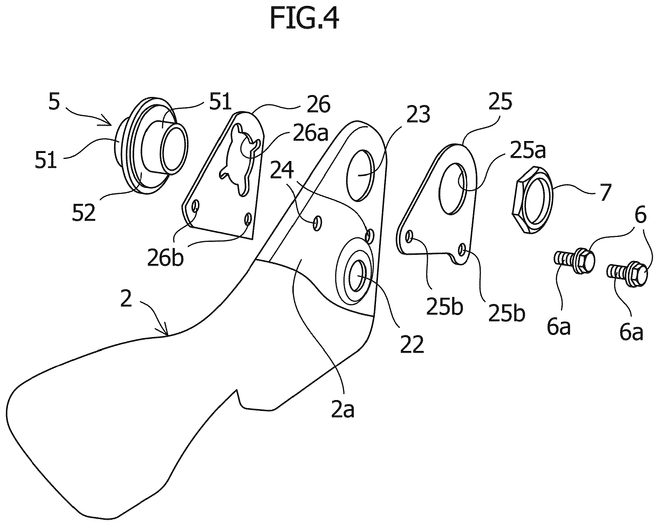

Further, as shown in Figures 3 and 4, the contact area between the inner cushion bracket 26 and the rear end portion 2a of the cushion frame 2 is formed to be larger than the contact area between the inner cushion bracket 26 and the main body portion 52 of the reclining mechanism 5, whereby the contact pressure generated in the resin cushion frame 2 is reduced to suppress generation of a creep phenomenon. Thus, the main body portion 52 of the reclining mechanism 5 is formed in a disc-like configuration the diameter of which is smaller than the outer configuration of the inner cushion bracket 26.

The shaft portion 51 of the reclining mechanism 5 is formed by joining a cylindrical component connecting the cushion frame 2 and the seatback frame 3 and of a length making it possible to rotatably support them to the inner and outer side surfaces of the main body portion 52, each extending in the vehicle width direction from the central position of the reclining mechanism 5.

On the other hand, as shown in Figures 2, 3, and 5, the seatback frame 3 of the present embodiment has an upper frame portion 31 extending along the vehicle width direction, and side frame portions 32 extending toward the down side of the vehicle on both the right and left sides of the upper frame portion 31, and these side frame portions 32 are arranged opposite each other. Further, at the lower end portion 32a of each side frame portion 32, there is provided an insertion hole 33 into which the shaft portion 51 of the reclining mechanism 5 is inserted, and at the outer peripheral portion of the insertion hole 33, there are provided, at fixed peripheral intervals, four insertion holes 34 into which screw portions 8a of bolts 8 that are fastening members are inserted.

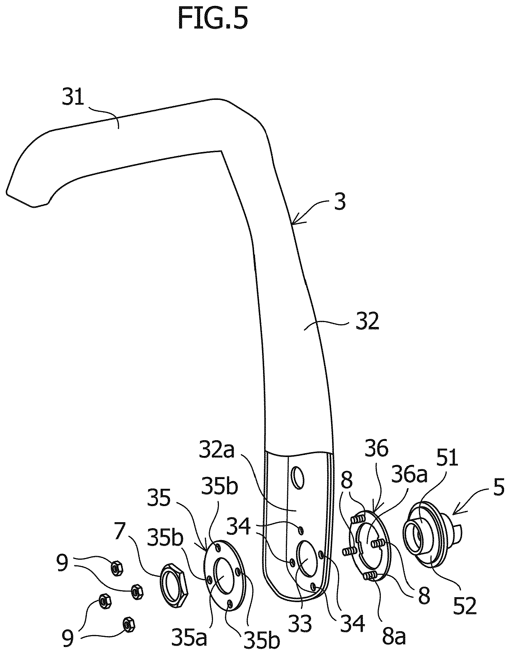

As shown in Figures 3 and 5, in the seatback frame 3 of the present embodiment, there is provided on the inner side of each side frame portion 32, an inner seatback bracket 35 formed of metal. Further, between the reclining mechanism 5 and the side frame portion 32, and on the outer side of the side frame portion 32, there is provided an outer seatback bracket 36 formed of metal that is joined for fixation to the main body portion 52 of the reclining mechanism 5 by welding or the like. The inner seatback bracket 35 and the outer seatback bracket 36 are formed by ring-like components having an outer diameter substantially corresponding to the size of the lower end portion 32a of the side frame portion 32. The inner seatback bracket 35 and the outer seatback bracket 36 have through-holes 35a and 36a through which the shaft portion 51 of the reclining mechanism 5 is passed. The four bolts 8 are joined through welding to the inner side surface of the outer seatback bracket 36 in a state in which the screw portions 8a are protruding, and these bolts 8 are respectively provided at portions corresponding to the insertion holes 34 of the seatback frame 3. In the inner seatback bracket 35, there are respectively provided, at portions corresponding to the insertion holes 34 of the seatback frame 3, four bolt holes 35b into which the screw portions 8a of the bolts 8 are inserted.

That is, as shown in Figures 2 and 3, in the seatback bracket 3 of the present embodiment, the lower end portion 32a of the side frame portion 32 is held between the outer seatback bracket 36 and the inner seatback bracket 35, and the outer seatback bracket 36 and the inner seatback bracket 35 are fixed in position through the intermediation of the seatback bracket 3 by threadedly engaging and fastening nuts 9 with the bolts 8 of which the screw portions 8a are inserted into the insertion holes 34 and the bolt holes 35b. In the state in which the shaft portion 51 is inserted into the through-hole 36a of the outer seatback bracket 36, into the insertion hole 33 of the side frame portion 32, and into the through-hole 35a of the inner seatback bracket 35, the ring nut 7 is threadedly engaged and fastened with the screw portion formed on the outer peripheral surface of the shaft portion 51, whereby the reclining mechanism 5 is fixed to the lower end portion 32a of the side frame portion 32. Further, adhesive may be applied between the lower end portion 32a of the side frame portion 32, the inner seatback bracket 35, and the outer seatback bracket 36, thereby joining the seatback bracket 3, and the seatback brackets 35 and 36 to each other more firmly.

As shown in Figures 3 and 5, the contact area between the outer seatback bracket 36 and the lower end portion 32a of the side frame portion 32 (seatback frame 3) is formed to be larger than the contact area between the outer seatback bracket 36 and the main body portion 52 of the reclining mechanism 5, whereby the contact pressure generated in the resin seatback frame 3 is reduced to suppress generation of a creep phenomenon. Thus, the contact portion of the main body portion 52 of the reclining mechanism 5 is formed as a disc of a smaller diameter than the outer configuration of the outer seatback bracket 36.

Thus, in the structure of the vehicle seat frame 1 of the present embodiment, the inner cushion bracket 26 and the cushion frame 2 are fixed to one side of the reclining mechanism 5, and the outer seatback bracket 36 and the seatback frame 3 are fixed to the other side of the reclining mechanism 5, so that it is possible to achieve an improvement in terms of the retaining strength for the reclining mechanism 5. Further, from whichever direction a shock load may be applied to the vehicle seat frame 1, it is possible to prevent concentration of stress due to collision at the mounting portion of the reclining mechanism 5, making it possible to prevent damage of the vehicle seat frame 1.

Further, the fastening direction of the bolts 6 and 8 and the nuts 9 is the vehicle width direction, and the bolts 6 and 8 and the nuts 9 can be fastened by a tool that finds its way from the vehicle width direction, so that it is possible to secure a sufficient space for the fastening operation, making it possible to achieve an improvement in terms of the workability in the fastening operation. The circle center of the ring nut 7 that is a fastening member for the reclining mechanism 5 is arranged coaxially with the rotational center of the reclining mechanism 5, so that it is possible to effect fixation at a position close to the rotational center of the reclining mechanism 5 and along the rotational direction of the reclining mechanism 5. As a result, even if a load in the releasing direction is input to the reclining mechanism 5, it is possible to disperse the input of the load, making it possible to prevent damage of the vehicle seat frame 1 due to concentration of the load.

Further, at least a plurality of bolts 8 are arranged on the outer seatback bracket 36, and the plurality of bolts 8 are arranged in a dispersed manner on the outer side of the ring nut 7, so that even if a peeling load is applied to the reclining mechanism 5, it is possible to effectively disperse the input of the load.

In this way, in the structure of the vehicle seat frame 1 according to the present embodiment, the resin seatback frame 3 is rotatably supported by the cushion frame 2 by means of the reclining mechanism 5. The outer cushion bracket 25 is provided on the outer side of the cushion frame 2, and between the reclining mechanism 5 and the cushion frame 2, there is provided the inner cushion bracket 26 fixed to the reclining mechanism 5. The cushion frame 2 is held between the outer cushion bracket 25 and the inner cushion bracket 26, and the outer cushion bracket 25 and the inner cushion bracket 26 are fixed in position by the bolts 6, which are fastening members.

Thus, in the structure of the vehicle seat frame 1 according to the present invention, the reclining mechanism 5 is retained by holding the cushion frame 2 between the outer cushion bracket 25 and the inner cushion bracket 26, so that even if the cushion frame 2 and the seatback frame 3 of the vehicle seat frame 1, to which a large force is applied due to a shock load or the like, are formed of resin, it is possible to prevent concentration of stress at the mounting portion of the reclining mechanism 5, making it possible to prevent damage of the vehicle cushion frame 1 due to a shock load. Further, the rigidity of the portion around the cushion frame 2 to which the reclining mechanism 5 is mounted is enhanced to substantially the same degree on the inner and outer sides of the cushion frame 2, so that it is possible to prevent concentration of stress to a specific portion of the cushion frame 2 due to a difference in rigidity between the inner and outer sides of the cushion frame 2, making it possible to prevent breakage of the cushion frame 2.

Further, in the structure of the vehicle seat frame 1 according to the present embodiment, the shaft portion 51 situated at the center of the reclining mechanism 5 is fastened for fixation by the ring nut 7, and the portion spaced away from the center of the reclining mechanism 5 is fastened for fixation by a plurality of bolts 6, so that in the case in which a shock load is applied due to collision from the rear of the vehicle, even if a load is generated which works to peel off the reclining mechanism 5 from the cushion frame 2, it is possible to prevent the outer cushion bracket 25 and the inner cushion bracket 26 from being peeled off from the cushion frame 2.

Further, in the structure of the vehicle seat frame 1 according to the present embodiment, the outer cushion bracket 25 and the inner cushion bracket 26 that are formed of metal are held between the bolts 6 and the ring nut 7 that are formed of metal and the resin cushion frame 2, and direct contact between the bolts 6, etc. and the cushion frame 2 is avoided, so that it is possible to prevent generation of a creep phenomenon, in which the cushion frame 2 is deformed by the fastening force, making it possible to secure the requisite fastening force for a long period of time.

Further, in the structure of the vehicle seat frame 1 according to the present embodiment, the inner seatback bracket 35 is provided on the inner side of the seatback frame 3, and, between the reclining mechanism 5 and the seatback frame 3, there is provided the outer seatback bracket 36 fixed to the reclining mechanism 5. The seatback frame 3 is held between the outer seatback bracket 36 and the inner seatback bracket 35, and the outer seatback bracket 36 and the inner seatback bracket 35 are fixed in position by the bolts 8 and the nuts 9 that are fastening members, so that it is possible to achieve the same effect as that of the cushion frame 2 and the reclining mechanism 5 of the embodiment. For example, it is possible to prevent generation of the creep phenomenon, and to retain the reclining mechanism 5 firmly.

Further, in the structure of the vehicle seat frame 1 according to the embodiment of the present invention, the contact area between the inner cushion bracket 26 and the cushion frame 2 is formed to be larger than the contact area between the inner cushion bracket 26 and the reclining mechanism 5, and the contact area between the outer seatback bracket 36 and the seatback frame 3 is formed to be larger than the contact area between the outer seatback bracket 36 and the reclining mechanism 5, so that it is possible to reliably reduce the contact pressure from the reclining mechanism 5 generated in the resin cushion frame 2 and the seatback frame 3, and to prevent generation of the creep phenomenon, making it possible to prevent deformation of the cushion frame 2 and the seatback frame 3.

The present invention is not restricted to the embodiment described in the foregoing but allows various variations and modifications without departing from the scope of the present invention, which is defined by the appended claims. Further, while in this description expressions such as the "vehicle front-rear direction" and the "vehicle width direction" are used, they are only used for the sake of convenience in illustration and do not specify any position in relation to the vehicle in the present invention.

While in the structure of the vehicle seat frame 1 of the embodiment the reclining mechanism 5 is formed such that the shaft portion 51 that is a cylindrical component is joined to the inner and outer side surfaces of the main body portion 52, the shaft portion 51 and the main body portion 52 may be formed as an integrally formed component. The structure of the vehicle seat frame 1 is applicable not only to the frame of the seatback of a front seat but also to the frame of the seatback of a rear seat.

### Reference Signs List

- 1: vehicle seat frame
- 2: cushion frame
- 2a: rear end portion
- 3: seatback frame
- 5: reclining mechanism
- 6, 8: bolt (fastening member)
- 7: ring nut
- 9: nut
- 10: vehicle seat
- 20: seat cushion
- 23: insertion hole
- 24: insertion hole
- 25: outer cushion bracket
- 25a: through-hole
- 25b: bolt hole
- 26: inner cushion bracket
- 26a: through-hole
- 26b: bolt hole
- 30: seatback
- 31: upper frame portion
- 32: side frame portion
- 32a: lower end portion
- 33: insertion hole
- 34: insertion hole
- 35: inner seatback bracket
- 35a: through-hole
- 35b: bolt hole
- 36: outer seatback bracket
- 36a: through-hole
- 51: shaft portion
- 52: main body portion

## Claims

1. A vehicle seat frame (1) structure comprising a resin seatback frame (3) and a cushion frame (2), the seatback frame (3) being rotatably supported by the cushion frame (2) by means of a reclining mechanism (5),
wherein an outer cushion bracket (25) is provided on an outer side of the cushion frame (2);
an inner cushion bracket (26) fixed to the reclining mechanism (5) is provided between the reclining mechanism (5) and the cushion frame (2); and
the cushion frame (2) is held between the outer cushion bracket (25) and the inner cushion bracket (26); and the outer cushion bracket (25) and the inner cushion bracket (26) are fixed in position by a fastening member (6).

2. The vehicle seat frame structure according to claim 1, wherein an inner seatback bracket (35) is provided on the inner side of the seatback frame (3);
an outer seatback bracket (36) fixed to the reclining mechanism (5) is provided between the reclining mechanism (5) and the seatback frame (3); and
the seatback frame (3) is held between the outer seatback bracket (36) and the inner seatback bracket (35); and the outer seatback bracket (36) and the inner seatback bracket (35) are fixed in position by a fastening member (8, 9).

3. The vehicle seat frame structure according to claim 1, wherein a contact area between the inner cushion bracket (26) and the cushion frame (2) is formed to be larger than a contact area between the inner cushion bracket (26) and the reclining mechanism (5).

4. The vehicle seat frame structure according to claim 2, wherein a contact area between the outer seatback bracket (36) and the seatback frame (3) is formed to be larger than a contact area between the outer seatback bracket (36) and the reclining mechanism (5).

5. The vehicle seat frame structure according to any one of claims 1 through 4, wherein on the outer side in the vehicle width direction of the reclining mechanism (5), there is provided a ring nut (7) fastening the reclining mechanism (5) to the cushion frame (2) from the outer side in the vehicle width direction; and a rotational center of the reclining mechanism (5) and a circle center of the ring nut (7) are coaxial with each other.

6. The vehicle seat frame structure according to any one of claims 1 through 5, wherein the fastening member (8, 9) includes a plurality of bolts (6) inserted from the outer side in the vehicle width direction of the outer cushion bracket (25); and the plurality of bolts (6) fasten for fixation the outer cushion bracket (25) and the inner cushion bracket (26) at a portion spaced away from a rotational center of the reclining mechanism (5).

## Patentansprüche

1. Fahrzeugsitz-Rahmenstruktur (1), die einen Rückenlehnenrahmen (3) aus Kunststoff und einen Polsterrahmen (2) umfasst, wobei der Rückenlehnenrahmen (3) mittels einer Neigungsverstellvorrichtung (5) drehbar von dem Polsterrahmen (2) getragen wird,
wobei ein äußerer Polsterhalter (25) an einer Außenseite des Polsterrahmens (2) vorgesehen ist;
zwischen der Neigungsverstellvorrichtung (5) und dem Polsterrahmen (2) ein an der Neigungsverstellvorrichtung (5) befestigter innerer Polsterhalter (26) vorgesehen ist; und
der Polsterrahmen (2) zwischen dem äußeren Polsterhalter (25) und dem inneren Polsterhalter (26) gehalten wird; und der äußere Polsterhalter (25) und der innere Polsterhalter (26) durch ein Befestigungselement (6) in ihrer Position fixiert werden.

2. Fahrzeugsitz-Rahmenstruktur nach Anspruch 1, wobei an der Innenseite des Rückenlehnenrahmens (3) ein innerer Rückenlehnenhalter (35) vorgesehen ist;
zwischen der Neigungsverstellvorrichtung (5) und dem Rückenlehnenrahmen (3) ein äußerer, an der Neigungsverstellvorrichtung (5) befestigter Rückenlehnenhalter (36) vorgesehen ist; und
der Rückenlehnenrahmen (3) zwischen dem äußeren Rückenlehnenhalter (36) und dem inneren Rückenlehnenhalter (35) gehalten wird; und der äußere Rückenlehnenhalter (36) und der innere Rückenlehnenhalter (35) durch ein Befestigungsmittel (8, 9) in ihrer Position fixiert werden.

3. Fahrzeugsitz-Rahmenstruktur nach Anspruch 1, wobei eine Kontaktfläche zwischen dem inneren Polsterhalter (26) und dem Polsterrahmen (2) größer ausgebildet ist als eine Kontaktfläche zwischen dem inneren Polsterhalter (26) und der Neigungsverstellvorrichtung (5).

4. Fahrzeugsitz-Rahmenstruktur nach Anspruch 2, wobei eine Kontaktfläche zwischen dem äußeren Rückenlehnenhalter (36) und dem Rückenlehnenrahmen (3) größer ausgebildet ist als eine Kontaktfläche zwischen dem äußeren Rückenlehnenhalter (36) und der Neigungsverstellvorrichtung (5).

5. Fahrzeugsitz-Rahmenstruktur nach einem der Ansprüche 1 bis 4, wobei auf der in Fahrzeugbreitenrichtung äußeren Seite der Neigungsverstellvorrichtung (5) eine Ringmutter (7) vorgesehen ist, die die Neigungsverstellvorrichtung (5) an dem Polsterrahmen (2) von der in Fahrzeugbreitenrichtung äußeren Seite aus befestigt; und eine Drehmitte der Neigungsverstellvorrichtung (5) und eine Kreismitte der Ringmutter (7) koaxial zueinander sind.

6. Fahrzeugsitz-Rahmenstruktur nach einem der Ansprüche 1 bis 5, wobei das Befestigungsmittel (8, 9) eine Vielzahl von Bolzen (6) umfasst, die in Fahrzeugbreitenrichtung von der Außenseite des äußeren Polsterhalters (25) eingesetzt sind; und die Vielzahl von Bolzen (6) den äußeren Polsterhalter (25) und den inneren Polsterhalter (26) an einem Abschnitt, der von einem Drehzentrum der Neigungsverstellvorrichtung (5) beabstandet ist, zur Fixierung befestigt.

## Revendications

1. Structure de cadre de siège de véhicule (1) comprenant un cadre de dossier en résine (3) et un cadre de coussin (2), le cadre de dossier (3) étant supporté de manière rotative par le cadre de coussin (2) au moyen d'un mécanisme d'inclinaison (5),
dans lequel un support de coussin extérieur (25) est prévu sur un côté extérieur du cadre de coussin (2) ;
un support de coussin intérieur (26) fixé au mécanisme d'inclinaison (5) est prévu entre le mécanisme d'inclinaison (5) et le cadre de coussin (2) ; et
le cadre de coussin (2) est maintenu entre le support de coussin extérieur (25) et le support de coussin intérieur (26) ; et le support de coussin extérieur (25) et le support de coussin intérieur (26) sont fixés en position par un élément de fixation (6).

2. Structure de cadre de siège de véhicule selon la revendication 1, dans laquelle un support de dossier intérieur (35) est prévu sur le côté intérieur du cadre de dossier (3) ; un support de dossier extérieur (36) fixé au mécanisme d'inclinaison (5) est prévu entre le mécanisme d'inclinaison (5) et le cadre de dossier (3) ; et
le cadre de dossier (3) est maintenu entre le support de dossier extérieur (36) et le support de dossier intérieur (35) ; et le support de dossier extérieur (36) et le support de dossier intérieur (35) sont fixés en position par un élément de fixation (8, 9).

3. Structure de cadre de siège de véhicule selon la revendication 1, dans laquelle une zone de contact entre le support de coussin intérieur (26) et le cadre de coussin (2) est formée pour être plus grande qu'une zone de contact entre le support de coussin intérieur (26) et le mécanisme d'inclinaison (5).

4. Structure de cadre de siège de véhicule selon la revendication 2, dans laquelle une zone de contact entre le support de dossier extérieur (36) et le cadre de dossier (3) est formée pour être plus grande qu'une zone de contact entre le support de dossier extérieur (36) et le mécanisme d'inclinaison (5).

5. Structure de cadre de siège de véhicule selon l'une quelconque des revendications 1 à 4, dans laquelle sur le côté extérieur dans le sens de la largeur du véhicule du mécanisme d'inclinaison (5), il est prévu un écrou annulaire (7) fixant le mécanisme d'inclinaison (5) au cadre de coussin (2) depuis le côté extérieur dans le sens de la largeur du véhicule ; et un centre de rotation du mécanisme d'inclinaison (5) et un centre de cercle de l'écrou annulaire (7) sont coaxiaux l'un par rapport à l'autre.

6. Structure de cadre de siège de véhicule selon l'une quelconque des revendications 1 à 5, dans laquelle l'élément de fixation (8, 9) comprend une pluralité de boulons (6) insérés depuis le côté extérieur dans le sens de la largeur du véhicule du support de coussin extérieur (25) ; et la pluralité de boulons (6) fixent pour fixation le support de coussin extérieur (25) et le support de coussin intérieur (26) au niveau d'une partie espacée d'un centre de rotation du mécanisme d'inclinaison (5).
